Europäisches Patentamt

European Patent Office

Office européen des brevets

(11) Veröffentlichungsnummer: **0 464 967 A1**

(12) **EUROPÄISCHE PATENTANMELDUNG**

(21) Anmeldenummer: **91250124.4**

(22) Anmeldetag: **04.05.91**

(51) Int. Cl.⁵: **C21B 3/08**

(30) Priorität: **03.07.90 DE 4021329**

(43) Veröffentlichungstag der Anmeldung:
**08.01.92 Patentblatt 92/02**

(84) Benannte Vertragsstaaten:
**DE ES FR GB IT**

(71) Anmelder: **Dr. Küttner GmbH & Co. KG**
**Bismarckstrasse 67**
**W-4300 Essen 1(DE)**

(72) Erfinder: **Schott, Klaus, Dr.-Ing.**
**Beethovenstrasse 3a**
**W-4220 Dinslaken(DE)**

(74) Vertreter: **Hoormann, Walter, Dr.-Ing. et al**
**FORRESTER & BOEHMERT**
**Widenmayerstrasse 4/I**
**W-8000 München 22(DE)**

(54) Verfahren und Vorrichtung zum kontinuierlichen Messen einer Schicht.

(57) Die Erfindung betrifft ein Verfahren und eine Vorrichtung zum Aufbereiten heißer, flüssiger Schlacke, bei dem die aufzubereitende Schlacke bis unter ihre Erstarrungstemperatur gekühlt wird, wobei die flüssige Schlacke dem oberen Bereich einer im wesentlichen aus einem körnigen Trägermaterial bestehenden Wirbelschicht zugeführt wird, deren (Beharrungs-)Temperatur unter der Erstarrungstemperatur der Schlacke gehalten wird.

Fig. 3

EP 0 464 967 A1

Die Erfindung betrifft ein Verfahren zum Aufbereiten von in Schmelzaggregaten wie z.B. Hoch- oder Kupolöfen anfallender heißer, flüssiger Schlacke, bei dem die aufzubereitende Schlacke zwecks (für eine Verwendbarkeit als Rohstoff angestrebter) Granulierung bis unter ihre Erstarrungstemperatur gekühlt wird.

Bei industriell anfallenden Schlacken handelt es sich bebanntlich um im Schmelzfluß entstandene Gemische von Silikaten, ggf. auch Sulfiden, Chloriden, Fluoriden und anderen Metallverbindungen, die bei metallurgischen Schmelzprozessen die Gangart und andere in den metallischen Schmelzprodukten unerwünschte Bestandteile der Schmelzbeschickung aufnehmen.

So entstehen in der Eisen- und Nichteisen-Metallurgie bspw. im Hochofen Schlacken aus der Gangart der Erze ($SiO_2$, CaO, MgO, $Al_2O_3$), der Koksasche und den Schmelzzuschlägen. Die Schlacken sind in erster Linie Silikate und haben die Aufgabe, schädliche Bestandteile und Verunreinigungen (in erster Linie Schwefel) aufzunehmen.

Weiterhin entsteht bspw. beim Windfrischverfahren die sog. Thomas-Schlacke; im Siemens-Martin-Prozeß fällt basische oder saure Schlacke ebenso an wie beim Betrieb von Elektrolichtbogenöfen. Weitere Beispiele für einen ständigen erheblichen Schlackeanfall stellen Reduktions- und Raffinationsprozesse der NE-Metallgewinnung sowie die Gußeisenerzeugung dar, wobei im Kupolofen Schlacken aus der Asche des Kokses, dem am Einsatzmaterial anhaftenden Sand und Rost, dem Abbrand sowie Zuschlägen gebildet werden.

Obwohl mithin Schlacke in der Metallurgie und Gießereitechnik im engeren Sinne ein "Abfallprodukt" darstellt, ist es keineswegs so, daß dieses "Nebenprodukt" etwa wertlos ist. Vielmehr stellt Schlacke für andere Technologien wie z.B. die Zement- oder Glasherstellung einen gut verwertbaren Rohstoff dar. Um Schlacke in geeigneter Weise verwerten zu können, bedarf sie indes nach ihrem Anfall im heißen, flüssigen Zustand einer Aufbereitung. So benötigt bspw. die Zementindustrie glasartig erstarrte, amorphe Schlacke, während für die Glasindustrie eine kristalline Erstarrung wünschenswert ist. Beiden vorgenannten und weiteren Verwendungsfällen (z.B. im Straßenbau) ist gemeinsam, daß die Schlacke nach ihrem Anfall zunächst aufbereitet werden muß, um sie zu granulieren und dabei ggf. ihre Struktur zu beeinflussen.

Diesbezüglich ist ein Verfahren bekannt, bei dem die aus einem Schmelzaggregat abfließende heiße Schlacke in einem Wasserstrom relativ hoher Geschwindigkeit abgeschreckt und dabei zugleich granuliert wird. Obwohl dieses Verfahren bei sachkundiger Durchführung zu einem gut weiter verwendbaren Rohstoff führt, ist es in höchstem Maße problematisch, weil bei der Durchführung dieses Verfahrens ersichtlich nicht befriedigend lösbare mechanische und/oder Umweltprobleme auftreten. Dabei ist die Wasserwirtschaft besonders problematisch, aber auch bspw. die bei dieser nassen Abschreckgranulierung in großem Umfange entstehenden, stark korrosiven Schwaden sind nicht zufriedenstellend beherrschbar.

Nachteilig ist bei dieser Naßgranulation weiterhin, daß naß aufbereitete Schlacke nur sehr begrenzt lagerfähig ist, da sie nach bestimmter Lagerzeit aufgrund ihrer hydraulischen Eigenschaften abbindet.

Im übrigen muß bei einer Weiterverarbeitung naß aufbereiteter Schlacke ein energetisch aufwendiger Trocknungsprozeß vorgeschaltet werden.

Es kommt hinzu, daß die fühlbare Wärme der Schlacke bei einer Naßgranulation nicht zurückgewonnen werden kann.

Trotz der beispielhaft genannten erheblichen Nachteile wird dieses Verfahren nach wie vor unter Inkaufnahme seiner erheblichen Nachteile in größerem Umfange praktiziert, um den erheblichen Schlackenanfall überhaupt einigermaßen beherrschen und dabei einen weiter verwendbaren (granulierten) Rohstoff erhalten zu können.

Der vorliegenden Erfindung liegt die Aufgabe zugrunde, die bekannten Verfahren und Vorrichtungen der eingangs beschriebenen Gattung unter Vermeidung der genannten und weiterer Nachteile so zu verbessern, daß man bei der Schlackenaufbereitung ohne Wasserwirtschaft auskommt und mithin die damit verbundenen Probleme vermeidet, wobei mit der erfindungsgemäß angestrebten Trockengranulierung nicht nur eine erheblich umweltfreundlichere Technologie angestrebt wird, sondern darüber hinaus auch insbesondere durch Gewinnung von Dampf oder/und Heißwasser eine möglichst große Wärmerückgewinnung möglich sein soll.

Die Lösung des verfahrensmäßigen Teils der vorstehenden Aufgabe besteht erfindungsgemäß darin, daß die aufzubereitende heiße, flüssige Schlacke dem oberen Bereich einer im wesentlichen aus einem körnigen Trägermaterial bestehenden, fluidisierten Wirbelschicht zugeführt wird, deren (Beharrungs-)Temperatur (vorzugsweise erheblich) unter der Erstarrungstemperatur der Schlacke gehalten wird.

Dabei ist bevorzugt vorgesehen, daß die aus einem Schmelzaggregat zugeführte flüssige Schlacke auf die Oberfläche der Wirbelschicht geleitet wird.

Überraschenderweise kommt es dabei nicht etwa zu einem Verstopfen der "Poren" in der Wirbelschicht des Trägermaterials. Offenbar eignet sich eine Wirbelschicht u.a. und insbesondere wegen ihrer hervorragenden Wärmeaustauscheigenschaften zur Lösung des vorliegenden (Kühl-

)Problems. Dabei wird offenbar die flüssig in die Wirbelschicht eingebrachte Schlacke aufgrund der Bewegung des körnigen Trägermaterials in kleinere Partikel zerteilt und sinkt sodann durch das Trägermaterial auf den Grund der Wirbelschicht ab, wobei die Schlackepartikel sich unter entsprechender Abkühlung verfestigen. Aufgrund der gleichsam schockartigen Abkühlung kommt es offenbar beim Eintauchen der Schlacke in die Wirbelschicht zu erheblichen Wärmespannungen und infolgedessen zu einer großen Zahl von Spannungrissen und Brüchen, so daß der erstrebte Granuliereffekt in hervorragender Weise eintritt.

Es hat sich als besonders zweckmäßig erwiesen, wenn die Rohdichte des die Wirbelschicht bildenden Trägermaterials kleiner ist als die Rohdichte der aufzubereitenden Schlacke, so daß die Absinkgeschwindigkeit gleichsam über die Rohdichte des Trägermaterials (bei vorgegebener Rohdichte der Schlacke) einzustellen ist. Will man ein relativ langsames Absinken der Schlacke erreichen, wird die Rohdichte des Trägermaterials bevorzugt nur etwas kleiner als die Rohdichte der Schlacke gewählt. Als besonders zweckmäßiges und dabei zugleich relativ preiswertes Trägermaterial hat sich Sand erwiesen, dessen Rohdichte von ca. 2,2 bis 2,3 etwas kleiner als die durchschnittliche Rohdichte von Schlacke (ca. 2,3 bis 2,5) ist, wobei eine besonders zweckmäßige, wirtschaftliche Arbeitsweise in der Verwendung von Gießerei-Altsand besteht.

Die erfindungsgemäße Lösung des vorrichtungsmäßigen Teils der obigen Aufgabe ist im wesentlichen gekennzeichnet durch ein (wenigstens teilweise) mit einem körnigen Trägermaterial gefülltes, kühlbares Behältnis, welches zur Schaffung einer Trägermaterial-Wirbelschicht an wenigstens eine Gasquelle anzuschließen ist und an seinem oberen Endabschnitt eine Schlacke-Beschickungsöffnung sowie an ihrem unteren Endabschnitt eine Entsorgungsöffnung für die aufbereitete Schlacke aufweist.

Bevorzugte Ausgestaltungen der vorliegenden Erfindung sind in den Unteransprüchen beschrieben.

Die Erfindung ist nachstehend an einem Ausführungsbeispiel unter Bezugnahme auf eine Zeichnung weiter erläutert. Es zeigt:

Fig. 1 eine etwas vereinfachte Darstellung eines Schlacken-Wirbelschichtreaktors;

Fig. 2 einen vergrößerten Teilschnitt durch den Reaktor gemäß Fig. 1; und

Fig. 3 eine schematische Darstellung einer erfindungsgemäßen Schlacken-Aufbereitungsanlage.

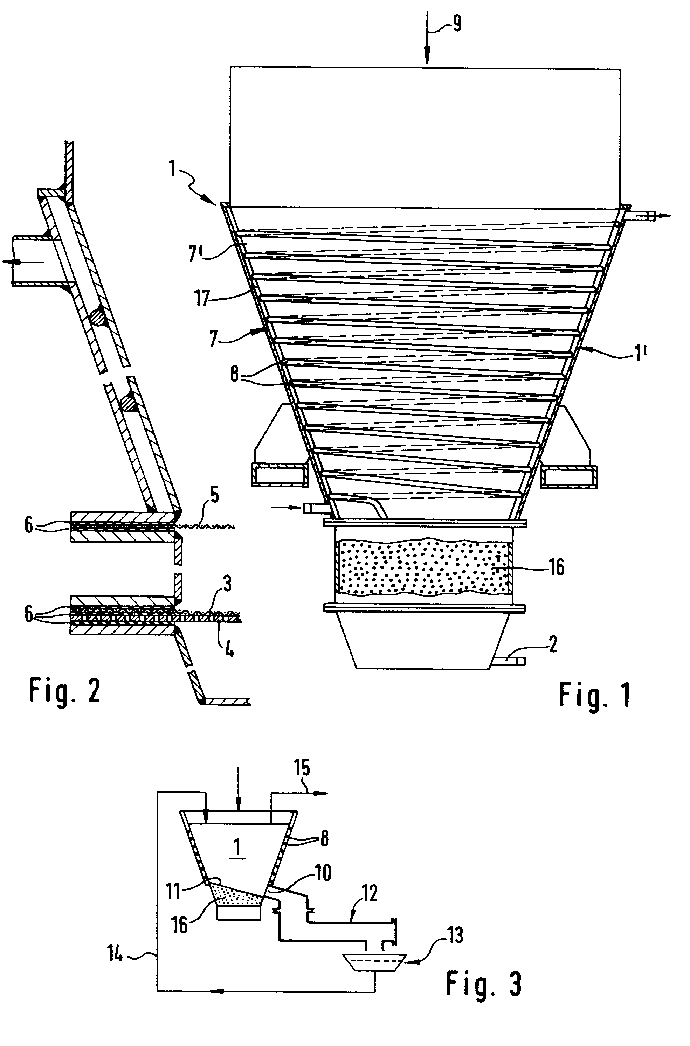

Fig. 1 zeigt den wesentlichen Teil einer Vorrichtung zum Aufbereiten heißer, flüssiger Schlacke durch trockene Granulierung, nämlich ein im ganzen mit 1 bezeichnetes, im wesentlichen trichterförmiges Behältnis, welches in seinem trichterförmigen Teil im wesentlichen mit einem körnigen Trägermaterial gefüllt ist, bei dem es sich um Sand handelt, und zwar im wesentlichen um Gießerei-Altsand.

Das Behältnis 1 ist zur Schaffung einer Trägermaterial-Wirbelschicht bei 2 an eine Druckluftquelle angeschlossen. Demgemäß ist (wie aus Fig. 2 erkennbar ist) im unteren Abschnitt des Behältnisses 1 ein mit einem Siebboden 3 belegtes Lochblech 4 angeordnet und ein weiterer Siebboden 5 befindet im oberen Flanschbereich, wobei Dichtungen 6 für die erforderliche Dichtigkeit sorgen. Zwischen dem Siebboden 5 und dem Lochblech 3 befindet sich eine im vorliegenden Falle aus Stahlkies bestehende Kugelschüttung 16. Mit dieser ist der für die Anströmung erforderliche Widerstand (= Druckverlust) einzustellen.

Der Mantel 7 des doppelwandigen Behältnisses 1 ist mit unterteilenden Leitblechen 8 für den Wasser-/Dampfströmraum 17 versehen, damit das Kühlmedium eine eindeutige Strömungsrichtung erfährt und keine partiellen Überhitzungen der Innenwand 7' auftreten können.

Die flüssige Schlacke wird dem Behältnis 1 von oben her gemäß dem Pfeil 9 zugeführt. Da die Rohdichte der Schlacke mit ca. 2,4 etwas größer ist als die Rohdichte des Trägermaterials, welche ca. 2,25 beträgt, wird die flüssig auf die Trägermaterial-Wirbelschicht gegebene Schlacke aufgrund der Wirbelschichtbewegung in kleine Partikel zerteilt, welche infolge der gegenüber dem Trägermaterial gröberen Partikel und der leicht unterschiedlichen Rohdichte langsam auf den Grund der Wirbelschicht absinken und sich dabei unter Abkühlung verfestigen, so daß die trocken granulierte Schlacke dem Behältnis 1 durch eine Entsorgungsöffnung 10 entnommen werden kann. Dabei ist bei dem dargestellten Ausführungsbeispiel vorgesehen (s. Fig. 3), daß die zum Boden 11 des Behältnisses 1 abgesunkene fertig granulierte Schlacke über den zur Horizontalen schräg angestellten Boden 11 verläßt und - ggf. über einen Zwischenförderer 12 - einer Siebmaschine 13 zugeführt wird, welche den noch an der Schlacke anhaftenden Sand des Trägermaterials absiebt. Dieser Sand wird sodann über eine pneumatische Förderleitung 14 wieder in das Behältnis 1 zurückgeführt.

Die im Behältnis 1 aufsteigenden Gase werden aus dem Behältnis 1 gemäß dem Pfeil 15 abgeführt und der Gasreinigungseinrichtung desjenigen Schmelzaggregates zugeführt, aus dem das Behältnis 1 jeweils mit flüssiger, aufzubereitender Schlacke beschickt wird.

Da die Aufbereitung (mit Ausnahme des geschlossenen Kühlsystems) ohne (offene) Wasserwirtschaft und auch im übrigen im wesentlichen gekapselt erfolgen kann, liegt mit der vorliegenden Erfindung eine extrem umweltfreundliche Möglichkeit vor, industrielle Schlacke zu einem wertvollen Rohstoff aufzubereiten, dessen Qualität die an ihn zu stellenden Anforderungen verschiedener Abnehmer voll erfüllt. Überraschenderweise kommt es auch im Verlaufe längerer Betriebszeit nicht zu einer Verstopfung des Trägermaterials, so daß ggf. kontinuierlich gefahren werden kann, wobei die erfindungsgemäß durchführbare Trockengranulierung durch Abkühlungsschock ein- oder mehrstufig erfolgen kann. Vorzugsweise ist die Kühlleistung der Kühleinrichtung steuerbar bzw. einstellbar, da die erzielte Beharrungstemperatur Einfluß auf die Struktur der aufbereiteten Schlacke haben kann, so daß auf diese Art und Weise mit ein und derselben Vorrichtung nach demselben Verfahren Endprodukte mit unterschiedlichem Materialeigenschaften erhalten werden können.

Es sei noch darauf verwiesen, daß dem (letzten) Behältnis 1 bzw. dessen Entsorgungsöffnung 10 ggf. eine Zerkleinerungseinrichtung wie ein Brecher nachgeordnet sein kann, wenn eine noch kleinere Schlackenkörnung gewünscht wird als sie bei Durchführung des erfindungsgemäßen Verfahrens von selbst entsteht.

Weiterhin sei noch ganz allgemein darauf verwiesen, daß der Mantel 7 des doppelwandigen Behältnisses 1 statt einer Wasserkühlung auch mit einer Verdampfungskühlung versehen sein kann, die dann bevorzugt auf unterschiedlichem Druckniveau zu betreiben ist, da dieses eine unterschiedliche Dampftemperatur und letztlich auch eine unterschiedliche Beharrungstemperatur des Trägermaterials bzw. der Wirbelschicht zur Folge hat, so daß eine besonders gezielte Steuerung ohne weiteres zu realisieren ist.

Alternativ oder vorzugsweise darüber hinaus kann gemäß einer bevorzugten Ausgestaltung der vorliegenden Erfindung im Bereich der Wirbelschicht auch wenigstens ein Wärmetauscher angeordnet sein, mittels dessen der Wirbelschicht Wärme zu entziehen ist, wobei ein solcher Wärmetauscher gleichsam in der Funktion eines "umgekehrten Tauchsieders" arbeitet, also von außen Wärme aufnimmt und hierdurch das in seinem Inneren strömende Strömungsmedium erwärmt, welches sodann bevorzugt - ebenso wie das/die Kühlmittel der Mantelkühlung - einer Wärme-Rückgewinnungseinrichtung zugeführt wird, um dem Kühlmittel die aufgenommene Wärme zu entziehen und diese zu nutzen.

BEZUGSZEICHENLISTE

(LIST OF REFERENCE NUMERALS)

| 1 | Behältnis (mit Doppelmantel 7 im konischen Teil 1') |
| 2 | Druckluftanschluß |
| 3 | Siebboden |
| 4 | Lochblech |
| 5 | Siebboden |
| 6 | Dichtungen |
| 7 | Mantel (von 1) |
| 7' | - Innenwand (von 7) |
| 8 | Leitbleche (zur Bildung eines schraubenförmigen Wasserhohlraums 17) |
| 9 | Pfeil |
| 10 | Entsorgungsöffnung |
| 11 | Boden |
| 12 | Zwischenförderer |
| 13 | Siebmaschine |
| 14 | Förderleitung |
| 15 | Pfeil |
| 16 | Kugelschüttung |
| 17 | Wasser-/Dampfströmraum (von 7) |

**Patentansprüche**

1. Verfahren zum Aufbereiten heißer, flüssiger Schlacke, bei dem die aufzubereitende Schlacke bis unter ihre Erstarrungstemperatur gekühlt wird, dadurch gekennzeichnet, daß die flüssige Schlacke dem oberen Bereich einer im wesentlichen aus einem körnigen Trägermaterial bestehenden Wirbelschicht zugeführt wird, deren (Beharrungs-)Temperatur unter der Erstarrungstemperatur der Schlacke gehalten wird.

2. Verfahren nach Anspruch 1, dadurch gekennzeichnet, daß die aufzubereitende Schlacke auf die Oberfläche der Wirbelschicht geleitet wird.

3. Verfahren nach Anspruch 1 oder 2, dadurch gekennzeichnet, daß die Rohdichte des die Wirbelschicht bildenden Trägermaterials kleiner ist als die Rohdichte der aufzubereitenden Schlacke.

4. Verfahren nach Anspruch 3, dadurch gekennzeichnet, daß die Rohdichte des die Wirbelschicht bildenden Trägermaterials nur etwas kleiner ist als die Rohdichte der Schlacke.

5. Verfahren nach Anspruch 4, dadurch gekennzeichnet, daß die Rohdichte des Trägermaterials etwa 5 bis 20 % kleiner ist als die Rohdichte der Schlacke.

6. Verfahren nach einem oder mehreren der Ansprüche 3 bis 5, gekennzeichnet durch ein im wesentlichen aus Sand bestehendes Trägermaterial.

7. Verfahren nach Anspruch 6, dadurch gekennzeichnet, daß im wesentlichen ein erheblicher Anteil des Trägermaterials aus Gießerei-Altsand besteht.

8. Vorrichtung zum Aufbereiten heißer, flüssiger Schlacke zur Durchführung des Verfahrens nach einem oder mehreren der vorhergehenden Ansprüche, gekennzeichnet durch ein wenigstens teilweise mit einem körnigen Trägermaterial gefülltes, kühlbares Behältnis (1), welches (bei 2) zur Schaffung einer Trägermaterial-Wirbelschicht an wenigstens eine Gasquelle anzuschließen ist, und welches an seinem oberen Endabschnitt eine Schlacke-Beschickungsöffnung sowie an seinem unteren Endabschnitt eine Entsorungsöffnung (10) für die aufbereitete Schlacke aufweist.

9. Vorrichtung nach Anspruch 8, dadurch gekennzeichnet, daß der Mantel (7) des Behältnisses (1) mit einer Kühleinrichtung (8) versehen ist.

10. Vorrichtung nach Anspruch 9, dadurch gekennzeichnet, daß der Mantel (7) des Behältnisses (1) mit einer Wasserkühlung (8) versehen ist.

11. Vorrichtung nach Anspruch 9, dadurch gekennzeichnet, daß der Mantel (7) des Behältnisses (1) mit einer Verdampfungskühlung versehen ist.

12. Vorrichtung nach Anspruch 11, dadurch gekennzeichnet, daß die Verdampfungskühlung auf unterschiedlichem Druckniveau zu betreiben ist.

13. Vorrichtung nach einem der Ansprüche 8 bis 12, dadurch gekennzeichnet, daß wenigstens ein Wärmetauscher im Bereich der Wirbelschicht angeordnet ist, mittels dessen der Wirbelschicht nach dem umgekehrten Tauchsiederprinzip Wärme zu entziehen ist.

14. Vorrichtung nach einem oder mehreren der Ansprüche 8 bis 13, dadurch gekennzeichnet, daß die Kühlleistung der Kühleinrichtung (8) veränderbar ist.

15. Vorrichtung nach einem oder mehreren der Ansprüche 8 bis 14, dadurch gekennzeichnet, daß das Trägermaterial klassiert ist.

16. Vorrichtung nach einem oder mehreren der Ansprüche 8 bis 15, dadurch gekennzeichnet, daß das Trägermaterial zumindest im wesentlichen aus Sand besteht.

17. Vorrichtung nach Anspruch 16, dadurch gekennzeichne, daß das Trägermaterial wenigstens teilweise aus Gießerei-Altsand besteht.

18. Vorrichtung nach einem oder mehreren der Ansprüche 8 bis 17, dadurch gekennzeichnet, daß die Gasquelle eine Druckluftquelle ist.

19. Vorrichtung nach einem oder mehreren der Ansprüche 8 bis 18, dadurch gekennzeichnet, daß der Entsorgungsöffnung (10) eine Zerkleinerungseinrichtung wie z.B. einem Brecher nachgeordnet ist.

20. Vorrichtung nach einem oder mehreren der Ansprüche 8 bis 19, dadurch gekennzeichnet, daß dem Behältnis (1) eine Siebeinrichtung (13) nachgeordnet ist, mittels welcher an der granulierten Schlacke haftendes Trägermaterial von der Schlacke zu trennen ist.

21. Vorrichtung nach Anspruch 20, dadurch gekennzeichnet, daß der Siebeinrichtung (13) eine Fördereinrichtung (14) nachgeordnet ist, mittels welcher abgesiebtes Trägermaterial wieder in das Behältnis (1) zu fördern ist.

22. Vorrichtung nach Anspruch 21, gekennzeichnet durch eine pneumatische Fördereinrichtung (14).

23. Vorrichtung nach einem oder mehreren der Ansprüche 8 bis 22, dadurch gekennzeichnet, daß das Behältnis (1) an seinem oberen Abschnitt eine Abgas-Sammelleitung (15) aufweist, die mit einem Wärmetauscher in Verbindung steht.

24. Vorrichtung nach Anspruch 23, dadurch gekennzeichnet, daß die Abgas-Sammelleitung (15) mit der Gasreinigungseinrichtung eines Schmelzaggregates verbunden ist, aus dem die Vorrichtung mit aufzubereitender Schlacke zu beschicken ist.

25. Vorrichtung nach einem oder mehreren der Ansprüche 8 bis 24, gekennzeichnet durch eine wenigstens zweistufige Ausbildung, wobei die Entsorgungsöffnung (10) der ersten Stufe mit der Beschickungsöffnung der zweiten Stufe in Verbindung steht.

26. Vorrichtung nach einem oder mehreren der Ansprüche 8 bis 25, gekennzeichnet durch einen schräg zur Horizontalen verlaufenden Behältnisboden (11), dessen tiefster Bereich im Bereich der Entsorgungsöffnung (10) liegt.

27. Vorrichtung nach einem oder mehreren der Ansprüche 8 bis 26, dadurch gekennzeichnet, daß die dem Trägermaterial bzw. der Wirbelschicht durch Kühlung entzogene Wärme dem Kühlmittel in einer Wärme-Rückgewinnungseinrichtung zu entziehen ist.

Fig. 2

Fig. 1

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 260 376 (GRANGES OXELOSUNDS JARNVERK) <br> * Ansprüche 1-16; Abbildung 1 * <br> — — — | 1-8,13, 15-27 | C 21 B 3/08 |
| X | FR-A-2 377 012 (ISHIKAWAJIMA-HARIMA JUKOGYO UND SUMITOMO METAL INDUSTRIES) <br> * Ansprüche 1-4; Abbildung 1 * <br> — — — | 1-8,13, 15-27 | |
| A | PATENT ABSTRACTS OF JAPAN vol. 1, no. 79 (C-77)(1547) 27. Juli 1977 <br> & JP-A-52 41 195 (MITSUBISHI JUKOGYO ) 30. März 1977 <br> * das ganze Dokument * <br> — — — | 8 | |
| A | EP-A-0 068 943 (CLESID) <br> * Ansprüche 1-4; Abbildungen 1,2 * <br> — — — | 8,13,18, 23,25 | |
| A | FR-A-1 063 166 (HUTTENWERKE ILSEDE-PEINE A.G.) <br> * Ansprüche 9,10; Abbildung 1 * <br> — — — — — | 9,10 | |

| RECHERCHIERTE SACHGEBIETE (Int. Cl.5) |
|---|
| C 21 B |

Der vorliegende Recherchenbericht wurde für alle Patentansprüche erstellt

| Recherchenort | Abschlußdatum der Recherche | Prüfer |
|---|---|---|
| Den Haag | 16 September 91 | ELSEN D.B.A. |